# EUROPEAN PATENT APPLICATION

(11) **EP 1 915 909 A1**
(43) Date of publication of application: **30.04.2008**
(21) Application number: 06123016.5
(22) Date of filing: 26.10.2006
(51) Int. Cl.: A22B 3/00, A61D 7/04

(54) **Device and method for stunning and/or killing animals using gas**

(71) Applicant: Mels, Wim, 9160 Lokeren (BE)
(72) Inventor: Mels, Wim, 9160 Lokeren (BE)
(74) Representative: Gevers, François

(57) **Abstract**

The invention relates to a device for stunning and/or killing animals using gas, comprising a substantially enclosed space 3 without internal subdivisions, a plurality of openings 4 distributed in said substantially enclosed space 3 for introducing said animals into said substantially enclosed space 3, and a supply of an anaesthetic, inert and/or toxic gas or gas mixture. The invention also relates to a method for using this device comprising the steps of introducing said animals into said substantially enclosed space 3 through at least several of said plurality of openings 4 and supplying to said substantially enclosed space 3 an anaesthetic, inert and/or toxic gas or gas mixture.

## Description

The present invention relates to a device and method for stunning and/or killing animals, in particular poultry, using gas.

In order to prevent the rapid propagation of epizooties, such as avian influenza, it may be necessary to quickly sacrifice large numbers of animals. While this has to be done at the lowest possible cost, there are also moral and legal requirements to perform this operation as humanely as possible. Experience has shown that the most appropriate means for fulfilling these conflicting requirements is by gassing.

Gassing is also used to sacrifice large numbers of animals in other circumstances, such as in laboratories or pelt farms. Also, gassing may be used to merely stun animals, for example before slaughter.

For gassing, the animals are usually introduced, individually or collectively, into a substantially enclosed space. Gasses are also introduced, into this substantially enclosed space in order to stun and/or kill the animals. Anaesthetic gasses are used for stunning; inert, oxygen-displacing gasses for stunning or killing by asphyxiation and toxic gasses for killing by poisoning.

When large numbers of animals are to be stunned and/or killed, it is important to distribute those animals within that substantially enclosed space, so as to avoid heaping the animals. Not only does such heaping induce unnecessary suffering in the animals, it may create pockets where the concentration of the anaesthetic, inert or toxic gasses remains too low to successfully stun or kill them.

This problem has been variously addressed in the state of the art.

In the International patent application WO 88/07328 A1 an apparatus for killing animals has been disclosed comprising individual compartments for each animal to be killed. The individual compartments are mounted in a rotatable unit enclosed by a cylinder with a single aperture. In use, the rotatable unit rotates so as to successively align each compartment with the single aperture in the cylinder. When each compartment is made accessible through the aperture, one animal is introduced into that compartment. As the rotatable unit continues to rotate, and that compartment moves away from the aperture, the compartment is then filled with an inert gas (nitrogen) in order to kill the animal by asphyxiation. The animal can then be extracted from the compartment when, after a full rotation, the compartment is again aligned with the aperture.

This apparatus and method have the drawback of being practical only for relatively small numbers of animals. As each animal is effectively individually killed, sacrificing large numbers of animals would be impractically time-consuming. Furthermore, the use of moving parts and individual compartments unduly increases the complexity and cost of the apparatus.

In the European patent application EP 1 616 482 A2, an alternative device and method for killing animals was disclosed. In this alternative, the animals are also contained in a plurality of compartments, in the form of cage boxes in a housing rack, towards which an inert gas (carbon dioxide) can be supplied through a ventilation system in order to kill the animals by asphyxiation.

As in the previously cited disclosure, the animals are distributed within the substantially enclosed space in which they are to be killed by compartmentalising this space. Not only does this increase the complexity and therefore the cost of the device, it is only practical when the animals are, as in the system disclosed there, already reared in those compartments. Otherwise the process of introducing the animals in each compartment would again be too time-consuming.

A different approach to distributing the animals within the substantially enclosed space in which they are to be gassed is disclosed in US 6 056 637, GB 2 362 083 A or EP 1 405 564 A1, in all of which the animals are run through the substantially enclosed space, either freely or in cages, using conveyor mechanisms. Although this allows a higher throughput than the previously cited disclosures, the use of moving parts and complex conveyor mechanisms again increases the cost while reducing the reliability of the device.

In order to solve the problem of distributing the animals within a single substantially enclosed space without subdivisions and avoiding heaping the animals, the device of the invention comprises a plurality of openings distributed in said substantially enclosed space for introducing animals into said substantially enclosed space. Through said plurality of openings the animals can be introduced in a distributed manner into different areas of the single substantially enclosed space without heaping. Furthermore, the animals can be simultaneously introduced through several of said plurality of openings, reducing the time necessary to load the device.

It is advantageous to locate said plurality of openings in an upper portion of the substantially enclosed space, so that the animals simply fall through the openings into the substantially enclosed space. This also reduces the chances of escape of the animals and, if the anaesthetic, inert and/or toxic gas or gas mixture is heavier than air, prevents to a large extent the escape of said gas or gas mixture. To further facilitate the introduction of the animals, each one of the openings preferably comprises sloping edges forming a guiding trough.

It is particularly advantageous if said device further comprise at least one loading box for mounting above one of said openings, said loading box being closed to the outside with an openable closure member. If this loading box is mounted, this further reduces the quantity of gas or gas mixture that can leak and makes it possible to simultaneously load animals and stun and/or kill them. To further facilitate the loading, while preventing the escape of the animals, said openable closure member is preferably an inwardly swinging flap.

Advantageously, the device comprises a plurality of lids for closing said plurality of openings. This enables the use of just part of said plurality of openings if the device is not to operate at full capacity. It also allows sealing the substantially enclosed space, for instance after introducing the animals.

Advantageously, said supply of anaesthetic, inert and/or toxic gas or gas mixture comprises solid and/or liquid matter in said substantially enclosed space for generating at least part of said anaesthetic, inert and/or toxic gas or gas mixture. Such solid and/or liquid matter can be more easily handled and introduced into said substantially enclosed space than a gas or gas mixture. It is particularly advantageous if said solid and/or liquid matter comprises frozen carbon dioxide, as it is easily available and can be manipulated without great risk.

At least part of said anaesthetic, inert and/or toxic gas or gas mixture can also be supplied through ducts into said substantially enclosed space.

To easily transport and dispose with the stunned or dead animals, said substantially enclosed space is a skip covered with a lid on which said plurality of openings are formed. This is particularly advantageous if the device is used for killing large numbers of animals, for instance to prevent the spread of diseases. The skip with the dead animals can then be directly loaded onto a truck and transported to a disposal facility, such as an incinerator.

Alternatively, a shipping container presents similar advantages.

The invention also relates to a method of using the device of the invention comprising the steps of :
a) introducing said animals into said substantially enclosed space through at least several of said plurality of openings;
b) supplying to said substantially enclosed space an anaesthetic, inert and/or toxic gas or gas mixture.

Introducing the animals into the substantially enclosed space through at least several of said plurality of openings permits to avoid heaping, and therefore ensures a reliable stunning and/or killing of the animals without unnecessary suffering.

In an advantageous embodiment of this method, at least part of said anaesthetic, inert and/or toxic gas or gas mixture is generated by solid and/or liquid matter in said substantially enclosed space, and the step of supplying to said substantially enclosed space said anaesthetic, inert and/or toxic gas or gas mixture comprises introducing said solid and/or liquid matter into said substantially enclosed space, preferably through at least one of said plurality of openings. Such solid and/or liquid matter can be more easily handled and introduced into said substantially enclosed space than a gas or gas mixture. It is particularly advantageous if said solid and/or liquid matter comprises frozen carbon dioxide, as it is easily available and can be manipulated without great risk.

In order to use the device only to stun the animals, but not to kill them, or to stun them before killing them, it is preferable that the gas or gas mixture supplied to said substantially enclosed space comprises an anaesthetic gas or gas mixture or an inert gas or gas mixture in sufficient concentration to displace enough oxygen to stun the animals but not to kill them.

In order to use the device to kill the animals, it is preferable that the gas or gas mixture supplied to said substantially enclosed space comprises an inert or toxic gas or gas mixture in sufficient concentration to kill the animals by asphyxiation and/or poisoning.

An embodiment of the invention will now be described illustratively, but not limitingly, with reference to the figures.

Figure 1 illustrates a longitudinal section of a device according to the invention; and

Figure 2 illustrates a transversal section of a device according to the invention.

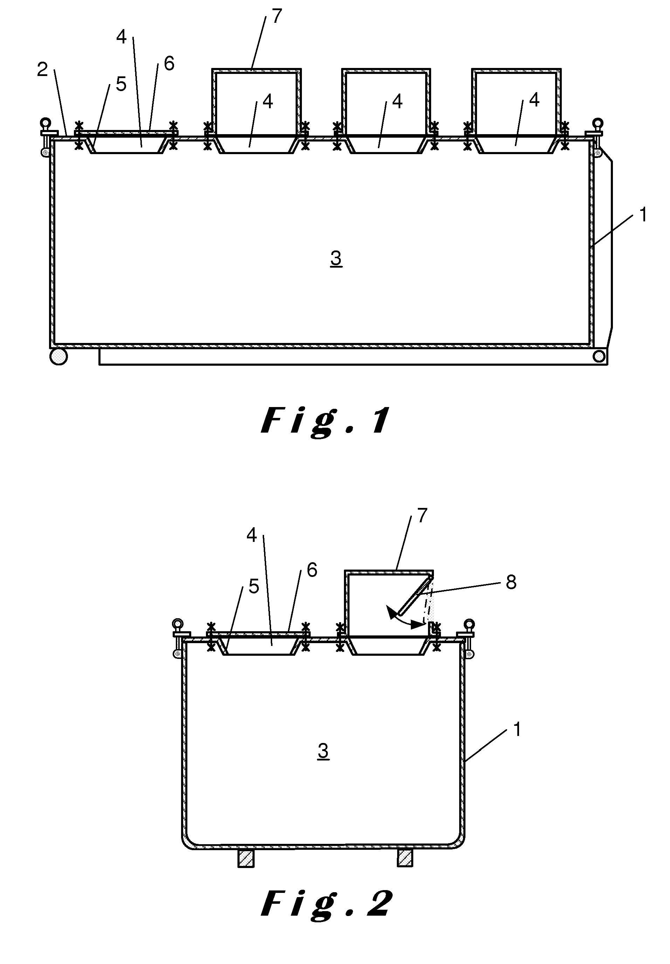

In the embodiment shown in Figures 1 and 2, the device of the invention comprises a skip 1, whose open top is covered with a lid 2 so as to form a substantially enclosed space 3. The lid 2, which could be provided separately in standard measurements, so as to be adapted to any skip with those standard measurements, is provided with a plurality of openings 4 distributed on the surface of the lid 2. Each one of those openings 4 is provided with sloping edges forming a guiding trough 5 to facilitate the loading of the skip 1 with animals to be stunned and/or killed through those openings 4. When not in use, each one of those openings 4 can be closed with a hatch 6.

In order to further facilitate the loading of the skip 1, a loading box 7 can be mounted on each of those openings 4. That loading box 7 is closed to the outside with an openable closure member 8 in the form of an inwardly swinging flap, as can be seen in Fig. 2.

To provide an anaesthetic and/or lethal atmosphere within said substantially enclosed space 3, the device also comprises a supply of an anaesthetic, inert and/or toxic gas or gas mixture. In this particular embodiment, this supply is in the form of frozen carbon dioxide, also known as dry ice, which is introduced into the skip 1 through at least one of the openings 4. As it sublimates at ambient temperature, this frozen carbon dioxide will generate inert gaseous carbon dioxide, which, being denser than oxygen, will displace it at least from the bottom of the substantially enclosed space 3, creating an atmosphere which, depending on the concentration of carbon dioxide, can stun or kill an animal breathing it.

It is also possible to supply at least part of the anaesthetic, inert and/or toxic gas or gas mixture through ducts connected to the substantially inert space 3, for instance through further openings in the skip 1 or the lid 2.

The illustrated device is particularly well adapted for killing large numbers of poultry. This has been a serious concern due to the spread of the avian influenza virus H5N1, with the preoccupation that it may mutate into a virus transmittable to and between humans. For this reason, it has been necessary to clear from possible carriers large areas surrounding avian influenza outbreaks. When those areas include intensive poultry farms, this may involve the killing of thousands of poultry, with the subsequent logistical problems.

To use the illustrated device, the poultry are introduced into the substantially enclosed space 3 through the inwardly swinging flaps 8 of the loading boxes 7 mounted on at least several of the plurality of openings 4. As the poultry are introduced through several openings 4 distributed over the lid 2, they do not form heaps at the bottom of the skip 1, thus both avoiding unnecessary distress and ensuring their exposure to the atmosphere at the bottom of the skip 1.

Preferably the anaesthetic, inert and/or toxic gas or gas mixture is introduced into the substantially enclosed space 3 before the animals, so that some animals can being killed or stunned while more animals are still being introduced into the substantially enclosed space 3. In this particular embodiment, this means that the frozen carbon dioxide is introduced in the substantially enclosed space 3 and left to sublimate at least partially, so that the gaseous carbon dioxide concentration in the atmosphere at least at the bottom of the substantially enclosed space 3 reaches lethal levels, before introducing the poultry. The loading boxes 7 with the inwardly swinging flaps 8 reduce the quantity of gaseous carbon dioxide that will leak during this operation, thus increasing effectiveness and reducing cost and operator hazard.

However, the anaesthetic, inert and/or toxic gas or gas mixture can also be introduced after or at the same time as the animals. It is also possible to stun the animals first and then kill them by supplying parts of the anaesthetic, inert and/or toxic gas or gas mixture in separate steps. For instance, frozen carbon dioxide can first be introduced into the substantially enclosed space 3 of the skip 1 of the illustrated embodiment in sufficient quantity to stun the animals but not to kill them. Once the animals are stunned, a toxic gas or gas mixture can then be introduced into the substantially enclosed space 3, for example over ducts, or the concentration of carbon dioxide further increased, so as to kill the animals humanely.

Finally, after the poultry are killed, the skip 1, preferably with the lid 2 still on, so as to ensure hygienic conditions, can be easily loaded onto a transport means, such as a truck, to transport the dead poultry directly to a disposal facility, such as an incinerator. For that transport, the loading boxes 7 can be removed, and all the openings 4 sealed with the hatches 6.

Although the present invention has been described with reference to specific exemplary embodiments, it will be evident that various modifications and changes may be made to these embodiments without departing from the broader scope of the invention as set forth in the claims. Accordingly, the description and drawings are to be regarded in an illustrative sense rather than a restrictive sense.

## Claims

1. A device for stunning and/or killing animals using gas, comprising:
a) a substantially enclosed space (3) without internal subdivisions;
b) a supply of an anaesthetic, inert and/or toxic gas or gas mixture; and **characterised in that** it also comprises a plurality of openings (4) distributed in said substantially enclosed space (3) for introducing said animals into said substantially enclosed space (3).

2. A device according to claim 1, wherein said openings (4) are located in an upper portion of the substantially enclosed space (3).

3. A device according to claim 2, wherein each one of said openings (4) comprises sloping edges forming a guiding trough (5).

4. A device according to one of claims 2 or 3, further comprising at least one loading box (7) for mounting above one of said openings (4), said loading box (7) being closed to the outside with an openable closure member (8).

5. A device according to claim 4, wherein said closure member (8) is an inwardly swinging flap.

6. A device according to any one of the previous claims, further comprising a plurality of hatches (6) for closing said plurality of openings (4).

7. A device according to any one of the previous claims, wherein said supply of anaesthetic, inert and/or toxic gas or gas mixture comprises solid and/or liquid matter in said substantially enclosed space for generating at least part of said anaesthetic, inert and/or toxic gas or gas mixture.

8. A device according to claim 7, wherein said solid and/or liquid matter comprises frozen carbon dioxide.

9. A device according to any one of the previous claims, wherein said supply comprises ducts for supplying at least part of said anaesthetic, inert and/or toxic gas or gas mixture to said substantially enclosed space (3).

10. A device according to any one of the previous claims, wherein said substantially enclosed space (3) is in a skip (1) covered with a lid (2) on which said plurality of openings (4) are formed.

11. A device according to any one of claims 1 to 9, wherein said substantially enclosed space (3) is in a shipping container.

12. A method of using a device according to any one of claims 1 to 11, and comprising the steps of:
a) introducing said animals into said substantially enclosed space (3) through at least several of said plurality of openings (4);
b) supplying to said substantially enclosed space (3) an anaesthetic, inert and/or toxic gas or gas mixture.

13. A method according to claim 12, wherein at least part of said anaesthetic, inert and/or toxic gas or gas mixture is generated by solid and/or liquid matter in said substantially enclosed space (3), and the step of supplying to said substantially enclosed space (3) said anaesthetic, inert and/or toxic gas or gas mixture comprises introducing said solid and/or liquid matter into said substantially enclosed space (3), preferably through at least one of said plurality of openings (4).

14. A method according to claim 13, wherein said solid and/or liquid matter comprises frozen carbon dioxide.

15. A method according to any one of claims 12 to 14, wherein the gas or gas mixture supplied to said substantially enclosed space comprises an anaesthetic gas or gas mixture or an inert gas or gas mixture in sufficient concentration to displace enough oxygen to stun the animals but not to kill them.

16. A method according to any one of claims 12 to 15, wherein the gas or gas mixture supplied to said substantially enclosed space comprises an inert or toxic gas or gas mixture in sufficient concentration to kill the animals by asphyxiation and/or poisoning.
